# EUROPEAN PATENT APPLICATION

(11) **EP 4 372 408 A1**
(43) Date of publication of application: **22.05.2024**
(21) Application number: 23204630.0
(22) Date of filing: 19.10.2023
(51) Int. Cl.: G01S 7/481, G01S 17/42, G02B 7/182, G02B 26/12

(54) **DRIVING ASSEMBLY, LIDAR, AND CARRIER ASSEMBLY**

(30) Priority: 21.11.2022 CN 202223091737 U
(71) Applicant: Innovusion (Suzhou) Co., Ltd., Suzhou, Jiangsu 215000 (CN)
(72) Inventor: WEI, Zhengmao, SUZHOU CITY, 215000 (CN); LU, Lirui, SUZHOU CITY, 215000 (CN)
(74) Representative: Sackin, Robert

(57) **Abstract**

The present disclosure provides a driving assembly (110), a LiDAR (100), and a carrier system. The driving assembly (110) comprises: a shaft (111) comprising a first end (1111) and a second end (1112); a first bearing (112) sleeved on an outer side of the shaft (111) and located close to the first end (1111); a second bearing (113) sleeved on the outer side of the shaft (111) and located close to the second end (1112); a stator (114) sleeved on the outer side of the shaft (111) and located between the first bearing (112) and the second bearing (113); and a rotor assembly (511) fixedly connected to an outer ring of the first bearing (112) and an outer ring of the second bearing (113) and arranged corresponding to the stator (114), the rotor assembly (511) being configured to be connected to the optical assembly (120). The spatial arrangement of the driving assembly (110) of the LiDAR (100) is optimized, so that the LiDAR (100) is more stable during rotation, and the wear of parts and components is reduced.

## Description

### TECHNICAL FIELD

The present disclosure relates to the technical field of light detection and ranging (LiDAR), and in particular, to a driving assembly, a LiDAR, and a carrier assembly.

### BACKGROUND ART

In autonomous driving and intelligent transportation technology, LiDAR is becoming an indispensable and important technical component. LiDAR is a radar system which measures features of a target, such as position, speed, by transmitting a laser beam. The LiDAR can also output point cloud data by analyzing information such as magnitude of reflection energy, and amplitude, frequency, and phase of a reflection spectrum of the surface of the target object, thereby presenting accurate three-dimensional structural information of the target object and further generating a three-dimensional image of the target object.

A rotating LiDAR has the advantages of 360° field of view, no point cloud stitching, etc. However, the LiDAR has some NVH (Noise, Vibration, Harshness) problems during rotation, which may cause some structures or parts to be severely worn and affect the service life of the LiDAR.

Methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

### SUMMARY

According to a first aspect, embodiments of the present disclosure provide a driving assembly, comprising a shaft, a first bearing, a second bearing, a stator, and a rotor assembly. The shaft comprises a first end and a second end. The first bearing is sleeved on an outer side of the shaft and located close to the first end. The second bearing is sleeved on the outer side of the shaft and located close to the second end. The stator is sleeved on the outer side of the shaft and located between the first bearing and the second bearing. The rotor assembly is fixedly connected to an outer ring of the first bearing and an outer ring of the second bearing and arranged corresponding to the stator. The rotor assembly is configured to be connected to the optical assembly.

According to a second aspect, the embodiments of the present disclosure provide a LiDAR, comprising: an optical assembly, and the driving assembly described above, the driving assembly being configured to drive the optical assembly to rotate.

According to a third aspect, the embodiments of the present disclosure provide a carrier assembly, comprising the LiDAR described above.

According to one or more embodiments of the present disclosure, a spatial structure of the driving assembly of the LiDAR is optimized, so that the driving assembly is more stable during rotation, the wear of parts and components is reduced, and the service life of the driving assembly is prolonged.

### BRIEF DESCRIPTION OF THE DRAWINGS

The accompanying drawings Illustratively show embodiments and form a part of the specification, and are used to illustrate exemplary implementations of the embodiments together with a written description of the specification. The embodiments shown are merely for illustrative purposes and do not limit the scope of the claims. Throughout the accompanying drawings, the same reference signs denote the same elements or similar but not necessarily identical elements.
FIG. 1 shows a schematic structural diagram of a LiDAR according to the embodiments of the present disclosure;
FIG. 2 shows a cross-sectional view of section A-A of the LiDAR in FIG. 1;
FIG. 3 shows a schematic structural diagram of a rotating holder of the LiDAR according to the embodiments of the present disclosure; and
FIG. 4 shows a schematic diagram of a carrier assembly comprising a LiDAR according to the embodiments of the present disclosure.

### List of reference signs:

carrier assembly 1000;
LiDAR 100, 100A, 100B, 100C, 100D, 100E, 100F, 100G, 100H, 200;
driving assembly 110; optical assembly 120;
shaft 111; first end 1111; second end 1112; first bearing 112; second bearing 113; stator 114; rotor assembly 115; rotating holder 1151; first connecting portion 1151A; intermediate connecting portion 1151B; second connecting portion 1151C; magnetic element 1152; receiving cavity 1153; first connecting cavity 1153A; intermediate cavity 1153B; second connecting cavity 1153C; mounting portion 1154.

### DETAILED DESCRIPTION OF EMBODIMENTS

The present disclosure will be further described in detail below with reference to the drawings and embodiments. It can be understood that specific embodiments described herein are used merely to explain a related invention, rather than limit the invention. It should be additionally noted that, for ease of description, only parts related to the related invention are shown in the accompanying drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules.

In the present disclosure, unless otherwise stated, the terms "first", "second", etc. used to describe various elements are not intended to limit the positional, temporal or importance relationship of these elements, but rather only to distinguish one element from the other. In some examples, the first element and the second element may refer to the same instance of the element, and in some cases, based on contextual descriptions, the first element and the second element may also refer to different instances.

The terms used in the description of the various examples in the present disclosure are for the purpose of describing particular examples only and are not intended to be limiting. If the number of elements is not specifically defined, there may be one or more elements, unless otherwise expressly indicated in the context. Moreover, the term "and/or" used in the present disclosure encompasses any of and all possible combinations of listed items.

LiDAR refers to a radar system that uses light to detect a position of a target and obtain characteristic quantities such as a target distance, a target speed, and a target attitude. Generally, a light source of the LiDAR generates light pulses, and an optical assembly then guides the light pulses emitted by the LiDAR in a specific direction, the optical assembly can guide the emitted light pulses along different paths so that the LiDAR can scan a surrounding environment. The light pulses emitted by the LiDAR are reflected or scattered after reaching a surrounding object, and some of the reflected or scattered light is returned to the LiDAR as a return signal. The optical assembly may be further configured to redirect the returned optical signal to a light sensor of the LiDAR.

The optical assembly is an assembly that changes the direction of an optical signal. The optical assembly may comprise one or more optical redirection elements (e.g., reflecting mirrors or lenses) that deflect the light pulses, for example, by rotating, vibrating, or directing, along an emission path to scan the external surrounding environment. The optical assembly may further comprise one or more optical redirection elements (e.g., reflecting mirrors or lenses) that deflect the returned optical signals, for example, by rotating, vibrating, or directing, to the light sensor along a receiving path. The optical redirection elements that direct optical signals along the emission and receiving paths may be the same assembly (e.g., a shared assembly), discrete assemblies (e.g., dedicated assemblies), and/or a combination of shared and discrete assemblies. These optical redirection elements may comprise, for example, rotating mirrors (e.g., rotating polyhedral mirrors) or fixed mirrors, to deflect the emitted pulse signals or the received returned signals in different directions.

In some examples, the optical assembly is configured to be rotatable, for example, rotate by 360 degrees clockwise or counterclockwise, and is used, for example, to scan one or more signals in a horizontal direction of the LiDAR.

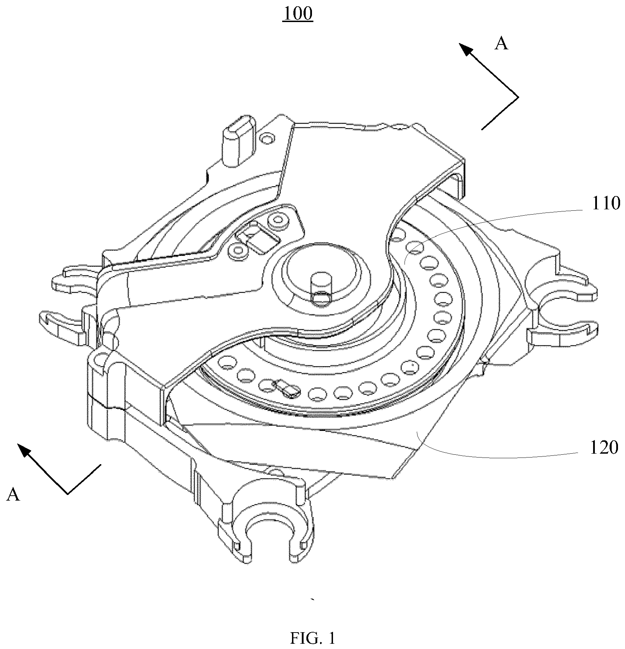

FIG. 1 shows a schematic structural diagram of a LiDAR 100 according to some embodiments of the present disclosure. As shown in FIG. 1, the LiDAR 100 comprises a driving assembly 110 and an optical assembly 120.

The driving assembly 110 is configured to drive the optical assembly 120 to rotate, so as to deflect the emitted pulse signals or the received returned signals in different directions. In some examples, the driving assembly 110 may be a motor.

A rotational movement of the optical assembly in the LiDAR may cause some NVH problems of the device. In some embodiments, two bearings of the LiDAR are arranged tightly adjacent to each other and are far away from a support point at the bottom of the shaft. This will cause the optical assembly to generate a relatively large moment at a bearing support position during the rotation, forming a flexural structure, so that a rotor of the motor is prone to swing, resulting in serious wear of the bearings and thus affecting the service life of the bearings.

According to the embodiments of the present disclosure, a driving assembly for a LiDAR is provided. The spatial arrangement of the structure of the driving assembly is optimized, so that the vibration and the wear of bearings can be alleviated during the rotation of the LiDAR.

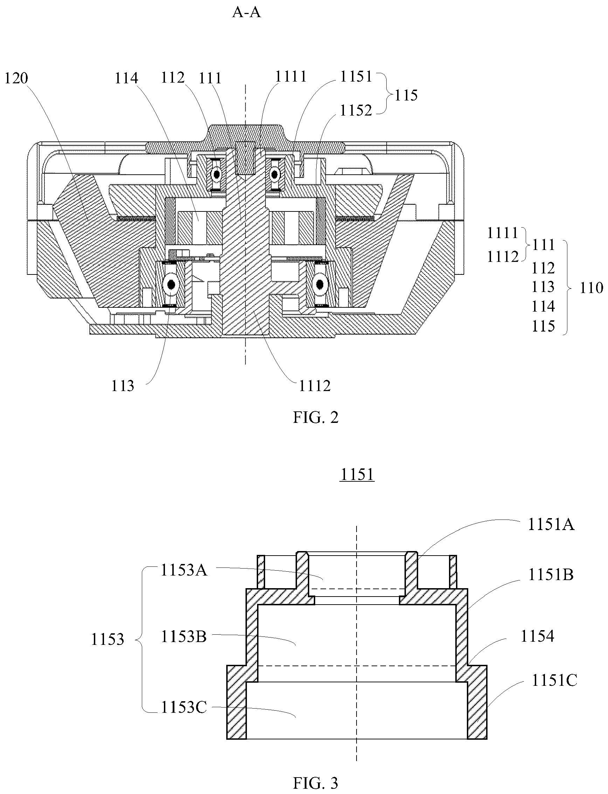

FIG. 2 shows a cross-sectional view of section A-A of the LiDAR 100 in FIG. 1. As shown in FIG. 2, the driving assembly 110 comprises: a shaft 111, a first bearing 112, a second bearing 113, a stator 114, and a rotor assembly 115.

The shaft 111 comprises a first end 1111 and a second end 1112. The first bearing 112 is sleeved on an outer side of the shaft 111 and located close to the first end 1111. The second bearing 113 is sleeved on the outer side of the shaft 111 and located close to the second end 1112. The stator 114 is sleeved on the outer side of the shaft 111 and located between the first bearing 112 and the second bearing 113. The rotor assembly 511 is fixedly connected to an outer ring of the first bearing 112 and an outer ring of the second bearing 113 and is arranged corresponding to the stator 114, and the rotor assembly 115 is configured to be connected to the optical assembly 120.

In an example, the shaft 111 may be fixedly supported on a base (not shown). Illustratively, the shaft 111 may be hollow or solid. The first bearing 112 and the second bearing 113 are respectively sleeved on outer side surfaces of two opposite ends of the shaft 111.

Illustratively, the first bearing 112 and the second bearing 113 may be rolling bearings, such as spherical roller bearings or cylindrical roller bearings. It can be understood that a rolling bearing is a precision mechanical element that converts the sliding friction between the operating shaft and a shaft seat into rolling friction so as to reduce friction loss. The rolling bearing is generally composed of four parts: an inner ring, an outer ring, rolling elements and a cage. With regard to the inner ring and the outer ring, one of them is typically configured to cooperate with a rotating component and rotate together with the rotating component; and the other is configured to cooperate with a fixing seat to provide a supporting function. The rolling elements are, for example, uniformly distributed between the inner ring and the outer ring by means of the cage, and the performance and the service life of the rolling bearing directly depend on the shape, size and number of the rolling elements. The cage keeps the rolling elements between the inner ring and the outer ring, guides the rolling elements to rotate and provide a lubrication function.

In an example, the inner rings of the first bearing 112 and the second bearing 113 are fixedly connected to an outer surface of the shaft 111, the outer rings of the first bearing 112 and the second bearing 113 are fixedly connected to the rotor assembly 115, and the rotor assembly 115 is coupled to the shaft 111 by means of the support of the first bearing 112 and the second bearing 113, achieving rotatable support for the rotor assembly 115.

The stator 114 may comprise a stator body and a coil winding wound around a surface of the stator body, and the stator 114 may be sleeved on the outer side of the shaft 111 between the first bearing 112 and the second bearing 113, and a rotating magnetic field is generated after energization to excite the rotor assembly 115 to rotate.

In this embodiment, the first bearing 112 and the second bearing 113 are respectively arranged in positions close to the two ends of the shaft 111 so as to respectively support the two ends of the shaft, so that a swinging moment during the rotation can be effectively suppressed and the amplitude of swing can be reduced; the stator 114 is arranged between the first bearing 112 and the second bearing 113, and the corresponding rotor assembly is also arranged between the first bearing 112 and the second bearing 113 correspond to the stator, so that the center of gravity of the driving assembly 110 as a whole can be adjusted to a position between the first bearing 112 and the second bearing 113, an unbalanced force generated during the rotation can be transferred to the upper and lower ends of the shaft 111, making a stress on the shaft 111 more uniform, reducing the NVH during the operation of the LiDAR, avoiding severe structural wear caused by excessive stress at local positions, and facilitating the prolonging of the service life of the LiDAR. In addition, the driving assembly 110 in this embodiment is arranged more compactly in the structural form, and its external dimensions are reduced to meet the requirements of more usage scenarios.

In some embodiments, as shown in FIG. 2, the rotor assembly 115 comprises a rotating holder 1151 and a magnetic element 1152. The rotating holder 1151 comprises a receiving cavity 1153 located on an inner side and a mounting portion 1154 located on an outer side. The receiving cavity 1153 is configured to receive the first bearing 112, the second bearing 113 and the stator 114, and the mounting portion 1154 is configured to be fixedly connected to the optical assembly 120.

The magnetic element 1152 is attached to an inner wall of the rotating holder 1151 forming the receiving cavity 1153 and is arranged corresponding to the stator 114.

In an example, the rotating holder 1151 is of a hollow annular structure, and the receiving cavity formed on the inner side receives the first bearing, the stator and the second bearing in sequence in an axial direction of the shaft, such that the driving assembly has a more compact structural arrangement and more uniform stress.

The magnetic element 1152 may be a permanent magnet, which is arranged in the receiving cavity so as to be excited by the energized stator 114 to drive the rotating holder 1151 to rotate together. Since the stator 114 is located between the first bearing 112 and the second bearing 113, the magnetic element 1152 is also located between the first bearing 112 and the second bearing 113, facilitating more stable transferring of an acting force generated by the magnetic drive to the two ends of the shaft.

FIG. 3 shows a schematic structural diagram of a rotating holder 1151 of a LiDAR according to the embodiments of the present disclosure.

In some embodiments, as shown in FIGS. 2 and 3, the rotating holder 1151 comprises a first connecting portion 1151A, an intermediate connecting portion 1151B, and a second connecting portion 1151C. The first connecting portion 1151A forms a first connecting cavity 1153A of the receiving cavity 1153, the first connecting cavity 1153A is configured to receive the first bearing 112, and an inner wall of the first connecting portion 1151A is fixedly connected to the outer ring of the first bearing 112. The second connecting portion 1151C forms a second connecting cavity 1153C of the receiving cavity 1153, the second connecting cavity 1153C is configured to receive the second bearing 113, and an inner wall of the second connecting portion 1151C is fixedly connected to the outer ring of the second bearing 113. The intermediate connecting portion 1151B is located between the first connecting portion 1151A and the second connecting portion 1151C, the intermediate connecting portion 1151B forms an intermediate cavity 1153B of the receiving cavity, the intermediate cavity 1153B is configured to receive the stator, and the magnetic element 1152 is located on an inner wall of the intermediate connecting portion 1151B.

In an example, the first connecting portion 1151A, the intermediate connecting portion 1151B, and the second connecting portion 1151C are arranged in sequence in the axial direction of the shaft 111, and the first connecting cavity 1153A, the intermediate cavity 1153B and the second connecting cavity 1153C of the receiving cavity 1153 are correspondingly formed in sequence to arrange the first bearing 112, the stator 114 and the second bearing 113 in sequence.

In some embodiments, the sizes of the first connecting cavity 1153A the intermediate cavity 1153B and the second connecting cavity 1153C increase in sequence; and the size of the outer ring of the second bearing 113 is greater than that of the outer ring of the first bearing 112.

In an example, the sequential increase in the sizes of the first connecting cavity 1153A, the intermediate cavity 1153B and the second connecting cavity 1153C refers to that the sizes of the inner walls forming the cavities increase in sequence, thereby forming a structure that is smaller near the first end 1111 and larger near the second end 1112. The sequential increase in the sizes of the receiving cavity allows an enough space to be provided for the mounting of the corresponding components. For example, the size of the second connecting cavity 1153C being greater than that of the intermediate cavity 1153B facilitates the mounting of the magnetic element 1152 and the stator 114.

The second bearing 113 is located at the bottom of the LiDAR, and needs to bear a static load of the LiDAR in addition to a dynamic load of the rotational movement. The size of the outer ring of the second bearing 113 being greater than that of the outer ring of the first bearing 112 facilitates the improvement of the load bearing capacity of the second bearing 113, so that the center of gravity of the driving assembly 110 as a whole gets close to the second end 1112 of the shaft 111, and the height of the center of gravity during the rotation is decreased, thereby facilitating the reduction of the vibration and improving the stability of the LiDAR during the rotation.

In some embodiments, an inner wall of the rotating holder 1151 is stepped in the axial direction of the shaft 111. A regular shape is conducive to machining, layout and mounting, thereby making the spatial structural layout compact and reasonable.

In some embodiments, the center of gravity of the rotor assembly 115 is located between the first bearing 112 and the second bearing 113. By optimizing the structural form of the rotor assembly, the center of gravity of the rotor assembly 115 is controlled between the first bearing 112 and the second bearing 113, facilitating the suppressing of the stress unbalance of the two ends of the shaft 111 during the rotation, reducing the NVH and the wear of the bearings of the driving assembly, and prolonging the service life of the LiDAR.

In some embodiments, as shown in FIG. 2, the mounting portion 1154 is located at an outer surface of the intermediate connecting portion 1151B. The mounting position of the optical assembly is located in the middle of the rotating holder, facilitating the concentration of the center of gravity of the LiDAR to the middle, so that the stress distribution of the shaft 111 is more uniform during the rotation of the rotor assembly and the optical assembly, and the wear of the bearings is reduced.

According to another aspect of the present disclosure, as shown in FIG. 1, provided is a LiDAR 100, comprising: an optical assembly 120 and a driving assembly 110 described above. The driving assembly 110 is configured to drive the optical assembly 120 to rotate. The spatial arrangement of the structure of the driving assembly is optimized, so that the NVH and the wear of bearings during the rotation of the LiDAR can be reduced, and the service life of the LiDAR can be prolonged.

In some embodiments, the optical assembly 120 may be a polygonal prism, which is mounted on the rotor assembly 115 of the driving assembly 110, so as to deflect emitted pulse signals or received returned signals in different directions.

According to still another aspect of the present disclosure, provided is a carrier assembly, comprising at least one LiDAR described above.

A carrier includes, but is not limited to, a vehicle, an unmanned aerial vehicle, a ship, etc., and application scenarios of the carrier include but are not limited to roadside detection devices, and other systems with a plurality of sensors that are used for dock monitoring, intersection monitoring, factories, etc.

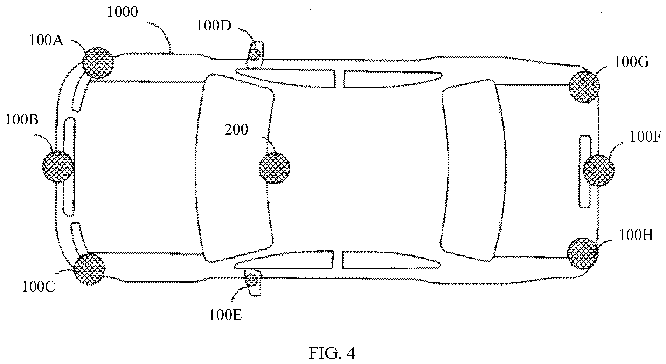

FIG. 4 shows a schematic diagram of a carrier assembly comprising a LiDAR according to the embodiments of the present disclosure. As shown in FIG. 4, the carrier assembly may be a vehicle 1000 with any level of automation. For example, the vehicle 100 may be a partially automated vehicle, a highly automated vehicle, a fully automated vehicle, or a driverless vehicle. The partially automated vehicle may perform some driving functions without human driver's aiding. For example, the partially automated vehicle may perform blind spot monitoring, lane keeping and/or lane changing operations, automatic emergency braking, intelligent cruise control and/or traffic following, etc. Some operations of the partially automated vehicle may be limited to a specific application or driving scenario (for example, only limited to driving on a highway). The highly automated vehicle may typically perform all the operations of the partially automated vehicle, and has fewer restrictions. The highly automated vehicle may also detect its own limits when being operated, and request a driver to take over control of the vehicle if necessary. The fully automated vehicle may perform all the vehicle operations without driver's aiding, may also detect its own limits, and request a driver to take over if necessary. The driverless vehicle may operate autonomously without any driver's aiding.

The carrier assembly 1000 comprises one or more LiDARs 200 and 100A-F. In an embodiment, as shown in FIG. 4, the vehicle 1000 may comprise a single LiDAR 200 (e.g., no LiDARs 100A-F) arranged at the highest location of the vehicle (e.g., at a roof). The arrangement of the LiDAR 200 at the roof facilitates 360-degree scanning around the vehicle 1000. In some other embodiments, the vehicle 1000 may comprise a plurality of LiDARs, including two or more of LiDARs 200 and/or LiDARs 100A-F. As shown in FIG. 4, in an embodiment, a plurality of LiDARs 200 and/or 100A-F are attached to the vehicle 1000 at different locations on the vehicle. For example, the LiDAR 100A is attached to a right front corner of the vehicle 1000; the LiDAR 100B is attached to the front center of the vehicle 1000; the LiDAR 100C is attached to a left front corner of the vehicle 1000; the LiDAR 100D is attached to a right side rearview mirror of the vehicle 1000; the LiDAR 100E is attached to a left side rearview mirror of the vehicle 1000; and/or the LiDAR 100F is attached to the rear center of the vehicle 1000. In some embodiments, the LiDARs 200 and 100A-F are stand-alone LiDARs 1000 that are provided with respective laser sources, electronic control apparatuses, transmitters, receivers, and/or steering mechanisms. In other embodiments, some of the LiDARs 200 and 100A-F may share one or more assemblies, thereby forming a distributed sensor system. In an example, an optical fiber is configured to transmit laser light from a concentrated laser source to the LiDARs. It should be understood that one or more LiDARs may be distributed and attached to a vehicle in any desired manner, and FIG. 4 shows only one embodiment. As another example, the LiDARs 100D and 100E may be attached to a B-pillar of the vehicle 1000. As still another example, the LiDAR 100B may be attached to a windshield of the vehicle 1000.

Some exemplary solutions of the present disclosure are described below.

Solution 1. A driving assembly of a LiDAR, the driving assembly being configured to drive an optical assembly of the LiDAR to rotate, wherein the driving assembly comprises:
a shaft comprising a first end and a second end;
a first bearing sleeved on an outer side of the shaft and located close to the first end;
a second bearing sleeved on the outer side of the shaft and located close to the second end;
a stator sleeved on the outer side of the shaft and located between the first bearing and the second bearing; and
a rotor assembly fixedly connected to an outer ring of the first bearing and an outer ring of the second bearing and arranged corresponding to the stator, the rotor assembly being configured to be connected to the optical assembly.

Solution 2. The driving assembly according to solution 1, wherein the rotor assembly comprises:
a rotating holder, the rotating holder comprising a receiving cavity located on an inner side and a mounting portion located on an outer side, the receiving cavity being configured to receive the first bearing, the second bearing and the stator, and the mounting portion being configured to be fixedly connected to the optical assembly; and
a magnetic element attached to an inner wall of the rotating holder forming the receiving cavity and arranged corresponding to the stator.

Solution 3. The driving assembly according to solution 2, wherein the rotating holder comprises:
a first connecting portion for forming a first connecting cavity of the receiving cavity, the first connecting cavity being configured to receive the first bearing, and an inner wall of the first connecting portion being fixedly connected to the outer ring of the first bearing;
a second connecting portion for forming a second connecting cavity of the receiving cavity, the second connecting cavity being configured to receive the second bearing, and an inner wall of the second connecting portion being fixedly connected to the outer ring of the second bearing; and
an intermediate connecting portion located between the first connecting portion and the second connecting portion, the intermediate connecting portion forming an intermediate cavity of the receiving cavity, the intermediate cavity being configured to receive the stator, and the magnetic element being located on an inner wall of the intermediate connecting portion.

Solution 4. The driving assembly according to solution 3, wherein the sizes of the first connecting cavity, the intermediate cavity and the second connecting cavity increase in sequence; and the size of the outer ring of the second bearing is greater than that of the outer ring of the first bearing.

Solution 5. The driving assembly according to any one of solutions 2 to 4, wherein an inner wall of the rotating holder is stepped in an axial direction of the shaft.

Solution 6. The driving assembly according to any one of solutions 1 to 5, wherein the center of gravity of the rotor assembly is located between the first bearing and the second bearing.

Solution 7. The driving assembly according to any one of solutions 3 to 6, wherein the mounting portion is located at an outer surface of the intermediate connecting portion.

Solution 8. A LiDAR, comprising:
an optical assembly; and
a driving assembly according to any one of solutions 1 to 7, the driving assembly being configured to drive the optical assembly to rotate.

Solution 9. The LiDAR according to solution 8, wherein the optical assembly is a polygonal prism which is mounted on a rotor assembly of the driving assembly.

Solution 10. A carrier assembly, the carrier assembly comprising:
a LiDAR according to solution 8 or 9.

The above descriptions are merely preferred embodiments of the present disclosure and explanations of the technical principles utilized. Those skilled in the art should understand that the scope of the invention involved in the embodiments of the present disclosure is not limited to the technical solutions formed by specific combinations of the foregoing technical features, and shall also cover other technical solutions formed by any combination of the foregoing technical features or equivalent features thereof without departing from the foregoing inventive concept. For example, a technical solution formed by a replacement of the above features with technical features with similar functions in the technical features disclosed in the embodiments of the present disclosure (but not limited thereto) also falls within the scope of the present disclosure.

## Claims

1. A driving assembly configured to drive an optical assembly of a LiDAR to rotate, the driving assembly comprising:
a shaft comprising a first end and a second end;
a first bearing sleeved on an outer side of the shaft and located close to the first end;
a second bearing sleeved on the outer side of the shaft and located close to the second end;
a stator sleeved on the outer side of the shaft and located between the first bearing and the second bearing; and
a rotor assembly fixedly connected to an outer ring of the first bearing and an outer ring of the second bearing and arranged corresponding to the stator, the rotor assembly being configured to be connected to the optical assembly.

2. The driving assembly according to claim 1, wherein the rotor assembly comprises:
a rotating holder, the rotating holder comprising a receiving cavity located on an inner side and a mounting portion located on an outer side, the receiving cavity being configured to receive the first bearing, the second bearing and the stator, and the mounting portion being configured to be fixedly connected to the optical assembly; and
a magnetic element attached to the inner wall of the rotating holder forming the receiving cavity and arranged corresponding to the stator.

3. The driving assembly according to claim 2, wherein the rotating holder comprises:
a first connecting portion for forming a first connecting cavity of the receiving cavity, the first connecting cavity being configured to receive the first bearing, and an inner wall of the first connecting portion being fixedly connected to the outer ring of the first bearing;
a second connecting portion for forming a second connecting cavity of the receiving cavity, the second connecting cavity being configured to receive the second bearing, and an inner wall of the second connecting portion being fixedly connected to the outer ring of the second bearing; and
an intermediate connecting portion located between the first connecting portion and the second connecting portion, the intermediate connecting portion forming an intermediate cavity of the receiving cavity, the intermediate cavity being configured to receive the stator, and the magnetic element being located on an inner wall of the intermediate connecting portion.

4. The driving assembly according to claim 3, wherein the sizes of the first connecting cavity, the intermediate cavity and the second connecting cavity increase in sequence; and the size of the outer ring of the second bearing is greater than that of the outer ring of the first bearing.

5. The driving assembly according to any one of claims 2-4, wherein an inner wall of the rotating holder is stepped in an axial direction of the shaft.

6. The driving assembly according to any one of claims 1 to 5, wherein the center of gravity of the rotor assembly is located between the first bearing and the second bearing.

7. The driving assembly according to any one of claims 3-6, wherein the mounting portion is located at an outer surface of the intermediate connecting portion.

8. A LiDAR, comprising:
an optical assembly; and
a driving assembly according to any one of claims 1-7, the driving assembly being configured to drive the optical assembly to rotate.

9. The LiDAR according to claim 8, wherein the optical assembly is a polygonal prism which is mounted on a rotor assembly of the driving assembly.

10. A carrier assembly, comprising:
a LiDAR according to claim 8 or 9.
